Europäisches Patentamt

European Patent Office

Office européen des brevets

(19)

(11) **EP 0 824 510 B1**

(12) **EUROPÄISCHE PATENTSCHRIFT**

(45) Veröffentlichungstag und Bekanntmachung des Hinweises auf die Patenterteilung:
**12.01.2000 Patentblatt 2000/02**

(51) Int Cl.⁷: **C04B 41/49**, C09D 183/08

(21) Anmeldenummer: **96919755.7**

(22) Anmeldetag: **10.05.1996**

(86) Internationale Anmeldenummer:
**PCT/EP96/01993**

(87) Internationale Veröffentlichungsnummer:
**WO 96/35652 (14.11.1996 Gazette 1996/50)**

(54) **EMULSIONEN VON ORGANOSILICIUMVERBINDUNGEN FÜR DIE HYDROPHOBIERUNG VON BAUSTOFFEN**

EMULSIONS OF ORGANOSILICON COMPOUNDS FOR MAKING BUILDING MATERIALS HYDROPHOBIC

EMULSIONS DE COMPOSES ORGANOSILICIQUES POUR RENDRE DES MATERIAUX DE CONSTRUCTION HYDROPHOBES

(84) Benannte Vertragsstaaten:
**AT BE CH DE ES FI FR GB IT LI NL SE**

(30) Priorität: **11.05.1995 DE 19517346**

(43) Veröffentlichungstag der Anmeldung:
**25.02.1998 Patentblatt 1998/09**

(73) Patentinhaber: **Wacker-Chemie GmbH**
**81737 München (DE)**

(72) Erfinder:
• **MAYER, Hans**
**D-84489 Burghausen (DE)**

• **KÖNIG-LUMER, Ingeborg**
**D-84489 Burghausen (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 068 671    EP-A- 0 476 452**
**EP-A- 0 606 671    WO-A-92/19671**
**DE-A- 4 242 445    DE-A- 4 335 077**
**US-A- 5 091 002**

**Beschreibung**

Die Erfindung betrifft wäßrige Emulsionen von Organosiliciumverbindungen für die Hydrophobierung von porösen mineralischen Baustoffen, sowie ein Verfahren zum Hydrophobieren der Baustoffe mit den Emulsionen.

Wäßrige Emulsionen siliciumorganischer Verbindungen werden im Bautenschutz vor allem wegen ihrer hervorragenden Imprägnierwirkung gegen Wasser und Schmutz, ihrer Umweltverträglichkeit und physiologischen Unbedenklichkeit eingesetzt.

In der US-A-4,757,106 ist die Imprägnierung von neutralen mineralischen Baustoffen mit einer wäßrigen Emulsion aus Ammoniumgruppen aufweisendem Polyorganosiloxan und Ethoxygruppen aufweisendem Polyorganosiloxan beschrieben. Die hydrophobierende Wirkung ist auf alkalischen Baustoffen geringer, da die Ammoniumgruppen neutralisiert werden und die Emulsion bricht. Die Polyorganosiloxane können dann kaum in den Baustoff eindringen.

Emulsionen, welche harzartige, Alkoxygruppen aufweisende Polyorganosiloxane als Wirkstoff enthalten, dringen gut in poröse Baustoffe ein und verleihen diesen gute Oberflächenhydrophobie. Dichte Baustoffe werden jedoch nur oberflächlich und zeitlich begrenzt geschützt.

Emulsionen von Alkylalkoxysilanen dringen zwar gut in Baustoffe ein, sind aber nicht lagerstabil. In der EP-A-340 816 sind gepufferte Emulsionen von Alkylalkoxysilanen beschrieben, die zwar lagerstabil sind, sich aber insbesondere in neutralen Baustoffen zu langsam abscheiden und deshalb schlecht hydrophobieren.

Emulsionen, welche harzartige, Alkoxygruppen aufweisende Polyorganosiloxane und Alkylalkoxysilane als Wirkstoff enthalten sind aus der US-A-5,091,002 bekannt. Diese Emulsionen sind ein Kompromiß zwischen Lagerbeständigkeit und hydrophobierender Wirkung an der Oberfläche.

Die bisher bekannten Emulsionen, welche kein Ammoniumgruppen aufweisendes Polyorganosiloxan enthalten, sind in verdünnter Form wenig lagerbeständig und zeigen eine unbefriedigende Frühwasserbeständigkeit.

Der Erfindung liegt die Aufgabe zugrunde, ein Verfahren zym Hydrophobieren von Baubeschichtungen bereitzustellen, das bei neutralen und basischen Baubeschichtungen besonders wirksam ist.

Gegenstand der Erfindung sind Poröse mineralische Baubeschichtungen bildende Zementfreie Beschichtungsmittel, die ausgewählt werden aus Mineralfarben, Siliconharzemulsionsfarben, und -putzen, Dispersionssilikatfarben, Dispersionsfarben, Streichfüller, Armierungsmassen und Grundierungen,enthaltend eine wäßrige Emulsion, welche die Komponenten

(A), welche ausgewählt werden aus

(A1) $C_1$-$C_{20}$-Alkyl-$C_2$-$C_6$-alkoxysilanen und
(A2) Alkoxygruppen enthaltendes Organopolysiloxan,

(B) Organopolysiloxan, das zusätzlich zu anderen Organosiloxaneinheiten solche Siloxaneinheiten enthält, die über SiC-gebundene Reste mit basischem Stickstoff aufweisen, mit der Maßgabe, daß die Aminzahl des Organopolysiloxans mindestens 0,01 beträgt, und
(C) Emulgator

enthält.

(A), welche ausgewählt werden aus

(A1) $C_1$-$C_{20}$-Alkyl-$C_2$-$C_6$-alkoxysilanen und
(A2) Alkoxygruppen enthaltendes Organopolysiloxan,

(B) Organopolysiloxan, das zusätzlich zu anderen Organosiloxaneinheiten solche Siloxaneinheiten enthält, die über SiC-gebundene Reste mit basischem Stickstoff aufweisen, mit der Maßgabe, daß die Aminzahl des Organopolysiloxans mindestens 0,01 beträgt, und
(C) Emulgator

enthält.

Vorzugsweise besitzen die $C_1$-$C_{20}$-Alkyl-$C_2$-$C_6$-alkoxysilane (A1) 1 oder 2 gleiche oder verschiedene, gegebenenfalls halogensubstituierte, über SiC-gebundene einwertige $C_1$-$C_{20}$-Alkylreste und die übrigen Reste sind gleiche oder verschiedene $C_2$-$C_6$-Alkoxyreste. Methoxysilane hydrolysieren zu schnell und verhindern eine ausreichende Lagerbeständigkeit.

Beispiele für die $C_1$-$C_{20}$-Alkylreste, sind der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest und Dodecylreste, wie der n-Dodecylrest; Cycloalkylreste, wie Cyclopentyl-, Cyclohexyl-, 4-Ethylcyclohexyl-, Cycloheptylreste, Norbornylreste und Methylcyclohexylreste.

Beispiele für halogensubstituierte $C_1$-$C_{20}$-Alkylreste sind mit Fluor-, Chlor-, Brom- und Jodatomen substituierte Alkylreste, wie der 3,3,3-Trifluor-n-propylrest, der 2,2,2,2',2',2'-Hexafluorisopropylrest und der Heptafluorisopropylrest.

Besonders bevorzugt sind die nicht substituierten $C_1$-$C_{12}$-Alkylreste.

Beispiele für $C_2$-$C_6$-Alkoxyreste sind der Ethoxy-, n-Propoxy-, Isopropoxy-, n-Butoxy-, iso-Butoxy-, sec.-Butoxy-, tert.-Butoxyrest; Pentyloxyreste, wie der n-Pentyloxyrest und Hexyloxyreste, wie der n-Hexyloxyrest. Die Ethoxyreste sind besonders bevorzugt.

Die Alkoxyreste können mit Halogenatomen substituiert sein, jedoch ist dies nicht bevorzugt.

Die Emulsion kann ein Alkoxygruppen enthaltendes Organopolysiloxan (A2) oder ein Gemisch mehrerer Organopolysiloxane enthalten. Die Organopolysiloxane können zusätzlich Hydroxylgruppen enthalten, die eine Bindung an die Baustoffe erleichtern.

Die Organopolysiloxane (A2) weisen vorzugsweise eine Viskosität von höchstens 2000 mm$^2$/s auf, um eine besonders gute Verteilung auf den Porenoberflächen im Mauerwerk zu erreichen.

Besonders geeignet sind die Organopolysiloxane (A2) aus Einheiten der allgemeinen Formel (I)

$$R_xSi(OR^1)_y(OH)_zO_{\frac{4-x-y-z}{2}} \qquad (I)$$

in der

R    gleiche oder verschiedene einwertige, gegebenenfalls halogensubstituierte, über SiC-gebundene $C_1$-$C_{20}$-Kohlenwasserstoffreste,

$R^1$   gleiche oder verschiedene einwertige $C_1$-$C_6$-Alkylreste,

x    0, 1, 2 oder 3, durchschnittlich 0,8 bis 1,8,

y    0,1 2, oder 3, durchschnittlich 0,01 bis 2,0 und

z    0, 1, 2 oder 3, durchschnittlich 0,0 bis 0,5 bedeuten, mit der Maßgabe, daß die Summe von x, y und z höchstens 3,5 beträgt.

Vorzugsweise besitzt das Organopolysiloxan (A2) eine Viskosität von 10 mm$^2$/s bis 50000 mm$^2$/s, insbesondere 50 mm$^2$/s bis 5000 mm$^2$/s bei 25°C.

Beispiele für die $C_1$-$C_{20}$-Kohlenwasserstoffreste sind die vorstehend bei den Organoalkoxysilanen (A1) aufgeführten $C_1$-$C_{20}$-Alkylreste und halogensubstituierten $C_1$-$C_{20}$-Alkylreste, die Alkenylreste, wie der Vinyl-, Allyl-, n-5-Hexenyl-, 4-Vinylcyclohexyl- und der 3-Norbornenylrest; Arylreste, wie der Phenyl-, Biphenylyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest. Besonders bevorzugt sind die nicht substituierten $C_1$-$C_{12}$-Alkylreste und der Phenylrest.

Obwohl in der vorstehend aufgeführten Formel nicht aufgeführt, kann ein Teil der Reste R durch direkt an Siliciumatome gebundene Wasserstoffatome ersetzt sein. Dies ist jedoch nicht bevorzugt.

Beispiele für die Reste $R^1$ sind der Methyl-, Ethyl-, n-Propyl-, Isopropyl-, n-Butyl-, sec.-Butyl-, und tert.-Butylrest; Pentylreste, wie der n-Pentylrest und Hexylreste, wie der n- Hexylrest, wobei die Ethylreste besonders bevorzugt sind.

Vorzugsweise hat x einen durchschnittlichen Wert von 0,9 bis 1,1. Vorzugsweise hat y einen durchschnittlichen Wert von 0,4 bis 1,2. Vorzugsweise hat z einen durchschnittlichen Wert von 0,0 bis 0,2.

Beispiele für Organosiloxane (A2) sind solche, die durch Umsetzung von Methyltrichlorsilan und gegebenenfalls einem $C_1$-$C_8$-Alkyltrichlorsilan, oder Phenyltrichlorsilan mit Ethanol in Wasser erhältlich sind, wie die Organopolysiloxane der Summenformeln

$$CH_3Si(OC_2H_5)_{0,8}O_{1,1}$$

oder

$$C_6H_5Si(OC_2H_5)_{0,72}O_{1,14}.$$

Die Organopolysiloxane (B) sind vorzugsweise solche aus Einheiten der allgemeinen Formel (II)

$$R^2{}_a R^3{}_b (OR^4)_c SiO_{\frac{4-a-b-c}{2}} \qquad \text{(II)},$$

in der

**R²** gleiche oder verschiedene einwertige, von basischem Stickstoff freie, gegebenenfalls halogensubstituierte, SiC-gebundene $C_1$-$C_{20}$-Kohlenwasserstoffreste bedeutet,

**R³** gleiche oder verschiedene einwertige, gegebenenfalls halogensubstituierte, SiC-gebundene basischen Stickstoff aufweisende $C_1$-$C_{30}$-Kohlenwasserstoffreste bedeutet,

**R⁴** gleich oder verschieden sein kann und Wasserstoffatom oder $C_1$-$C_6$-Alkylreste,

**a** 0, 1, 2 oder 3,

**b** 0, 1, 2 oder 3, durchschnittlich mindestens 0,05 und

**c** 0, 1, 2 oder 3 ist,

mit der Maßgabe, daß die Summe aus **a**, **b** und **c** kleiner oder gleich 3 ist und daß die Aminzahl des Organopolysiloxans (B) mindestens 0,01 beträgt.

Die Aminzahl bezeichnet die Anzahl der ml 1-n-HCl, die zum Neutralisieren von 1 g Organopolysiloxan (B) erforderlich sind. Die Aminzahl des Organopolysiloxans (B) beträgt vorzugsweise mindestens 0,1, insbesondere mindestens 0,2, und vorzugsweise höchstens 8, insbesondere höchstens 4.

Beispiele und bevorzugte Beispiele für den Rest **R²** sind vorstehend bei Rest **R** aufgeführt. Insbesondere sind der Methyl- und der Isooctylrest bevorzugt.

Vorzugsweise ist an jedes Siliciumatom, an das ein Wasserstoffatom gebunden ist, auch ein Kohlenwasserstoffrest, insbesondere ein Methylrest, gebunden.

Bevorzugt handelt es sich bei Rest **R³** um einen Rest der allgemeinen Formel (III)

$$R^5{}_2 NR^6\text{-} \qquad \text{(III)},$$

worin

**R⁵** gleich oder verschieden sein kann und Wasserstoff oder einwertiger, gegebenenfalls substituierter $C_1$-$C_{10}$-Kohlenwasserstoffrest oder $C_1$-$C_{10}$-Aminokohlenwasserstoffrest und

**R⁶** einen zweiwertigen $C_1$-$C_{15}$-Kohlenwasserstoffrest bedeutet.

Beispiele für Rest **R⁵** sind die für Rest **R** gegebenen Beispiele für Kohlenwasserstoffreste sowie mit Aminogruppen substituierte Kohlenwasserstoffreste, wie Aminoalkylreste, wobei der Aminoethylrest besonders bevorzugt ist.

Vorzugsweise ist an jedes Stickstoffatom in den Resten der allgemeinen Formel (III) mindestens ein Wasserstoffatom gebunden.

Bevorzugt handelt es sich bei Rest **R⁶** um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Rest **R⁶** sind der Methylen-, Ethylen-, Propylen-, Butylen-, Cyclohexylen-, Octadecylen-, Phenylen- und Butenylenrest.

Bevorzugte Beispiele für Reste **R³** sind

$H_2N(CH_2)_3\text{-}$,
$H_2N(CH_2)_2NH(CH_2)_2\text{-}$,
$H_2N(CH_2)_2NH(CH_2)_3\text{-}$,
$H_2N(CH_2)_2\text{-}$,
$H_3CNH(CH_2)_3\text{-}$,
$C_2H_5NH(CH_2)_3\text{-}$,
$H_3CNH(CH_2)_2\text{-}$,
$C_2H_5NH(CH_2)_2\text{-}$,
$H_2N(CH_2)_4\text{-}$,
$H_2N(CH_2)_5\text{-}$,
$H(NHCH_2CH_2)_3\text{-}$,

$C_4H_9NH(CH_2)_2NH(CH_2)_2-$,
cyclo-$C_6H_{11}NH(CH_2)_3-$,
cyclo-$C_6H_{11}NH(CH_2)_2-$,
$(CH_3)_2N(CH_2)_3-$ ,
$(CH_3)_2N(CH_2)_2-$ ,
$(C_2H_5)_2N(CH_2)_3-$ und
$(C_2H_5)_2N(CH_2)_2-$ .

Die Beispiele für Alkylreste $R^1$ gelten im vollen Umfang auch für den Rest $R^6$.

Beispiele und bevorzugte Beispiele für den Rest $R^4$ sind vorstehend bei Rest $R^1$ aufgeführt. Insbesondere sind der Methyl- und der Ethylrest bevorzugt.

Der bevorzugte durchschnittliche Wert für **a** ist 0 bis 2, insbesondere 0 bis 1,8.

Der bevorzugte durchschnittliche Wert für **b** ist 0,1 bis 0,6, insbesondere 0,15 bis 0,30.

Der bevorzugte durchschnittliche Wert für **c** ist 0 bis 0,8, insbesondere 0,01 bis 0,6.

Vorzugsweise haben die Organopolysiloxane (B) eine Viskosität von 5 bis 5000, insbesondere von 100 bis 3000 mm$^2$/s bei 25°C.

Organopolysiloxane (B) können in bekannter Weise, beispielsweise durch Äquilibrieren bzw. Kondensieren von aminofunktionellen Silanen mit Organopolysiloxanen, die Alkoxygruppen und/oder Hydroxylgruppen enthalten und die frei von basischem Stickstoff sind, hergestellt werden.

Die wässrigen Emulsionen enthalten einen an sich bekannten Emulgator (C).

Als anionische Emulgatoren eignen sich besonders:

1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid(PO)einheiten.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.

3. Alkali- und Ammoniumsalze von Carbonsäuren mit 8 bis 20 C-Atomen im Alkyl-, Aryl-, Alkaryl- oder Aralkylrest.

4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Als nichtionische Emulgatoren eignen sich besonders:

5. Polyvinylalkohol, der noch 5 bis 50 %, vorzugsweise 8 bis 20 % Vinylacetateinheiten aufweist, mit einem Polymerisationsgrad von 500 bis 3000.

6. Alkylpolyglycolether, vorzugsweise solche mit 8 bis 40 EO-Einheiten und Alkylresten von 8 bis 20 C-Atomen.

7. Alkylarylpolyglycolether, vorzugsweise solche mit 8 bis 40 EO-Einheiten und 8 bis 20 C-Atomen in den Alkyl- und Arylresten.

8. Ethylenoxid/Propylenoxid(EO/PO)-Blockcopolymere, vorzugsweise solche mit 8 bis 40 EO- bzw. PO-Einheiten.

9. Additionsprodukte von Alkylaminen mit Alkylresten von 8 bis 22 C-Atomen mit Ethylenoxid oder Propylenoxid.

10. Fettsäuren mit 6 bis 24 C-Atomen.

11. Alkylpolyglykoside der allgemeinen Formel R*-O-Z$_o$, worin R* einen linearen oder verzweigten, gesättigten oder ungesättigten Alkylrest mit im Mittel 8 - 24 C-Atomen und Z$_o$ einen Oligoglykosidrest mit im Mittel o = 1 - 10 Hexose- oder Pentoseeinheiten oder Gemischen davon bedeuten.

12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.

13. Polare Gruppen enthaltende lineare Organo(poly)siloxane, insbesondere solche mit Alkoxygruppen mit bis zu 24 C-Atomen und/oder bis zu 40 EO- und/oder PO-Gruppen.

Als kationische Emulgatoren eignen sich besonders:

14. Salze von primären, sekundären und tertiären Fettaminen mit 8 bis 24 C-Atomen mit Essigsäure, Schwefelsäure, Salzsäure und Phosphorsäuren.

15. Quarternäre Alkyl- und Alkylbenzolammoniumsalze, insbesondere solche, deren Alkylgruppe 6 bis 24 C-Atome besitzen, insbesondere die Halogenide, Sulfate, Phosphate und Acetate.

16. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.

Als Ampholytische Emulgatoren eignen sich besonders:

17. Langkettig substituierte Aminosäuren, wie N-Alkyl-di(aminoethyl-)glycin oder N-Alkyl-2-aminopropionsäuresalze.

18. Betaine, wie N-(3-Acylamidopropyl)-N,N-dimethylammoniumsalze mit einem $C_8$-$C_{18}$-Acylrest und Alkyl-imidazolium-Betaine.

Bevorzugt als Emulgatoren sind nichtionische Emulgatoren, insbesondere die vorstehend unter 9. aufgeführten Additionsprodukte von Alkylaminen mit Ethylenoxid oder Propylenoxid, die vorstehend unter 11. aufgeführten Alkylpolyglykoside und der vorstehend unter 5. aufgeführte Polyvinylalkohol. Besonders bevorzugte Polyvinylalkohole enthalten noch 5 bis 20 %, insbesondere 10 bis 15 % Vinylacetateinheiten und weisen vorzugsweise einen Polymerisationsgrad von 500 bis 3000, insbesondere von 1200 bis 2000 auf.

Die Gesamtmenge der Komponenten (A) und (B) in den wässrigen Emulsionen beträgt vorzugsweise 1 bis 80 Gew.-%, insbesondere 10 bis 75 Gew.-%, speziell 30 bis 70 Gew.-%.

Der Anteil des Emulgators (C) beträgt vorzugsweise 0,1 bis 30 Gew.-%, insbesondere 2 bis 10 Gew.-% der Gesamtmenge der Komponenten (A) und (B).

Die Emulsionen können zusätzlich übliche Füllstoffe und Verdickungsmittel, insbesondere verstärkende Füllstoffe, also Füllstoffe mit einer BET-Oberfläche von mehr als 50 $m^2$/g, wie pyrogen hergestellte Kieselsäure, gefällte Kieselsäure und Silicium-Aluminium-Mischoxide großer BET-Oberfläche enthalten. Besonders geeignet ist hochdisperse Kieselsäure. Es kann eine Art von Füllstoff, es kann auch ein Gemisch von mindestens zwei Füllstoffen eingesetzt werden. Der Anteil an Füllstoffen beträgt vorzugsweise höchstens 5, insbesondere 2 Gew.-% der Gesamtmenge der Komponenten (A) und (B).

Die Emulsionen können auch noch Puffersubstanzen enthalten, die den pH-Wert im Bereich von 5 bis 8 stabilisieren, in dem die Alkyltrialkoxysilane sehr hydrolysebeständig sind. Geeignet sind alle organischen und anorganischen Säuren und Basen, die sich gegenüber den übrigen Bestandteilen der Emulsionen chemisch inert verhalten, insbesondere die Alkali-, Erdalkali- und Ammoniumsalze von Carbonsäuren, Phosphor-, Kohlen- und Schwefelsäure. Besonders bevorzugt sind Natriumcarbonat, Natriumhydrogencarbonat, Natriumhydrogenphosphat, und ein Gemisch aus Essigsäure und wässriger Ammoniaklösung. Die bevorzugte Menge an Puffersubstanzen beträgt vorzugsweise höchstens 3, insbesondere 1 Gew.-% der Gesamtmenge der Komponenten (A) und (B).

Die Emulsionen können zusätzlich zu den vorstehend beschriebenen Bestandteilen als Zusatzstoffe Fungizide, Bakterizide, Algicide, Mikrobicide, Geruchsstoffe, Korrosionsinhibitoren und Entschäumer enthalten. Die bevorzugte Menge an Zusatzstoffen beträgt höchstens 2, insbesondere 0,5 Gew.-% der Gesamtmenge der Komponenten (A) und (B).

Die wässrigen Emulsionen werden nach üblichen Verfahren zur Herstellung von wässrigen Emulsionen hergestellt. Vorzugsweise wird zunächst nur ein Teil des Wassers mit Emulgator (C) vermischt, danach die Komponente (B) und schließlich die Komponente (A) emulgiert, bis eine viskose ölphase entsteht und anschließend das restliche Wasser zur Bildung einer weniger viskosen Emulsion zuemulgiert. Die Komponenten (A) und (B) können auch vermischt und zu einer Emulsion aus Emulgator und Wasser gegeben werden. Das Mischen erfolgt vorzugsweise in Druckemulgiermaschinen, Kolloidmühlen oder insbesondere in einer schnellaufenden Stator-Rotor-Rührvorrichtung nach Prof. P. Willems.

Ebenfalls Gegenstand der Erfindung ist ein Verfahren zur Hydrophobierung von poröse mineralische Baubeschichtungen bildenden Beschichtungsmitteln, bei dem die Beschichtungsmittel mit der vorstehenden wäßrigen Emulsion versetzt werden.

Insbesondere wird die Frühregenfestigkeit bei Bautenbeschichtungsmitteln verbessert.

In den folgenden Beispielen beziehen sich alle Angaben von Teilen und Prozentsätzen, soweit nichts anderes angegeben ist, auf das Gewicht. Sofern nicht anders angegeben, werden die nachstehenden Beispiele bei einem Druck der umgebenden Atmosphäre, also etwa bei 0,10 MPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben beziehen sich auf eine Temperatur von 25°C. Der Festgehalt der Emulsionen bezeichnet die Summe aller Komponenten, mit Ausnahme von Wasser.

**Beispiele**

Als Komponente (A) werden eingesetzt:

H1: iso-Octyltriethoxysilan

H2: Organopolysiloxan der Summenformel $CH_3Si(OC_2H_5)_{0,8}O_{1,1}$ mit einem durchschnittlichen Molekulargewicht von etwa 650 g/Mol und einer Viskosität von etwa 20 mm$^2$/s.

H3: Als hochviskose Flüssigkeit vorliegendes Methylsiliconharz aus $CH_3SiO_{3/2}$-Einheiten, mit etwa 20 Mol-% $(CH_3)_2SiO_{2/2}$-Einheiten und etwa 10 Mol-% $C_2H_5OSiO_{3/2}$-Einheiten und einem Molekulargewicht von etwa 5000 g/Mol.

H4: Pulverförmig vorliegendes Methylsiliconharz aus $CH_3SiO_{3/2}$-Einheiten, mit etwa 3 Mol-% $(CH_3)_2SiO_{2/2}$-Einheiten und etwa 4 Mol-% $C_2H_5OSiO_{3/2}$-Einheiten, einem Molekulargewicht von etwa 5000 g/Mol und einem Erweichungspunkt von etwa 50°C.

Als Komponente (B) werden eingesetzt:

N1: Kondensationsprodukt aus eines in den endständigen Einheiten je eine Si-gebundene Hydroxylgruppe aufweisenden $\alpha,\omega$-Dihydroxymethylpolysiloxans und N(-2-Aminoethyl)-3-aminopropyltrimethoxysilan in Gegenwart von KOH mit einer Aminzahl von etwa 0,3, einer Viskosität von etwa 1500 mm$^2$/s bei 25°C und einem Restmethoxygehalt von weniger als 5 Mol-%, bezogen auf die anfangs im N(-2-Aminoethyl)-3-aminopropyltrimethoxysilan vorhandenen Methoxygruppen.

N2: Kondensationsprodukt analog N1, jedoch mit einer Aminzahl von etwa 0,6, einer Viskosität von etwa 2000 mm$^2$/s bei 25°C.

N3: Kondensationsprodukt aus H2 und N(-2-Aminoethyl)-3-aminopropyltrimethoxysilan in Gegenwart von KOH mit einer Aminzahl von etwa 3,0, einer Viskosität von etwa 500 mm$^2$/s bei 25°C und einem Restmethoxygehalt von weniger als 5 Mol-%, bezogen auf die anfangs im N(-2-Aminoethyl)-3-aminopropyltrimethoxysilan vorhandenen Methoxygruppen.

Als Komponente (C) werden eingesetzt:

E1: Genamin$^R$ 200 von Hoechst AG, Frankfurt, ein Umsetzungsprodukt aus Stearylamin und Ethylenoxid

E2: Glukopon$^R$ 225 von Henkel KGaA, Düsseldorf, ein Fettalkohol C8-C10 Glykosid in wäßriger Lösung

E3: Polyviol$^R$ W 25/140 von Wacker-Chemie GmbH, München, ein Polyvinylalkohol mit einem Polymerisationsgrad von etwa 1600, der noch 11 - 14 % Acetoxyethyleneinheiten aufweist

Herstellung der Emulsionen

Die wäßrigen Emulsionen werden dadurch hergestellt, daß zunächst ein Teil des Wassers mit Emulgiermittel vermischt wird und aminofunktionelles Polysiloxan gefolgt von Silan und/oder Siliconharz emulgiert wird. Sowohl das zunächst erwähnte Vermischen als auch das Emulgieren erfolgt in einer schnellaufenden Stator-Rotor-Rührvorrichtung nach Prof. P. Willems. Die Zusammensetzungen sind nachstehend in Tabelle I aufgeführt.

Tabelle I

| Emulsion | Silan bzw. Siliconharz/ [Gew.-%] | Aminopolysiloxan/ [Gew.-%] | Emulgator/[Gew.-%] | Wasser [Gew.-%] | Festegehalt [Gew.-%] |
|---|---|---|---|---|---|
| EM 1 | H 1/66,5 | N 1/3,5 | E 1/0,7 | 29,3 | 70,7 |
| EM 2 | H 1/34 | N 2/34 | E 1/2 | 30 | 70 |
| EM 3 | H 1/3,5 | N 1/66,5 | E 1/4 | 26 | 74 |
| EM 4 | H 2/43 | N 1/28 | E 1/2,9 | 26,1 | 73,9 |
| EM 5 | H 2/61,2 | N 1/6,8 | E 1/2 | 30 | 70 |
| EM 6 | H 3/23 | N 3/23 | E 2/2 + E 3/2 | 50 | 50 |
| EM 7 | H 1/32,4 + H 4/8,1 | N 2/4,5 | E1/1,3 + E 2/3,7 | 50 | 50 |
| EM 8 | H 1/54 | N 1/6 | E1/0,5 + E 2/2,7 | 36,8 | 63,2 |
| EM 9 | H 1/6 | N 1/54 | E 1/1 + E 2/3 | 36 | 64 |
| EM 10 | H 2/6,8 | N 1/61,2 | E 2/2 + E 3/1 | 29 | 71 |

Die Emulsionen EM 1 bis EM 10 zeigen nach 14 Tagen Lagerung bei 50°C keinerlei Phasentrennung, ebenso nach 6 Monaten Lagerung bei Raumtemperatur. Sie sind also lagerstabil.

Herstellung der nicht erfindungsgemäßen Emulsionen

Die nicht erfindungsgemäßen Emulsionen wurden analog den Emulsionen EM 1 bis 10 hergestellt. Die Zusammensetzungen sind nachstehend in Tabelle II aufgeführt.

Tabelle II

| Emulsion | Silan bzw. Siliconharz/ [Gew.-%] | Aminopolysiloxan/ [Gew.-%] | Emulgator/ [Gew.-%] | Wasser [Gew.-%] | Festeghalt [Gew.-%] |
|---|---|---|---|---|---|
| VE 1 | H 1/60 | - | E 1/0,5 + E 2/2,7 | 36,8 | 63,2 |
| VE 2 | i-Octyltrimethoxysilan/60 | - | E 1/0,5 + E 2/2,7 | 36,8 | 63,2 |
| VE 3 | i-Octyltrimethoxysilan/54 | A 1/6 | E 1/0,5 + E 2/2,7 | 36,8 | 63,2 |

**Beispiel 1:**

Die Emulsionen werden mit Wasser auf den in der nachstehenden Tabelle III Festgehalt verdünnt.

Vor der Anwendung an porösen mineralischen Baustoffen werden erfindungsgemäße und nicht erfindungsgemäße Emulsionen 14 Tage bei 50°C gelagert und optisch beurteilt. Die in der nachstehenden Tabelle III aufgeführten Symbole weisen folgende Bedeutungen auf:

+++ :    keine optische Veränderung
++ :    leichte Agglomeration (Auf rahmen), durch Schütteln reversibel
+ :    starke Agglomeration (Aufrahmen), durch Schütteln reversibel
- :    irreversible Phasentrennung durch Koaleszenz.

Eine 6-monatige Lagerung der Emulsionen bei Raumtemperatur bewirkt die gleichen Veränderungen.

Tabelle III

| Emulsion / Festgehalt | Lagerstabilität |
|---|---|
| EM 1, 70,7 | +++ |
| EM 1, 20 | +++ |
| EM 8, 63,2 | +++ |
| EM 8, 50 | +++ |
| EM 8, 20 | +++ |
| EM 8, 10 | +++ |
| EM 8, 5 | +++ |
| VE 1, 63,2 | ++ |
| VE 1, 20 | - |
| VE 2, 63,2 | + |
| VE 2, 20 | - |
| VE 3, 63,2 | + |
| VE 3, 20 | + |

**Beispiel 2: Hydrophobierendes Grundierungsmittel für mineralische Beschichtungen auf mineralischen Baustoffen**

Auf 10 Gew.-% Festgehalt verdünnte Emulsion EM 2 wird auf Kalksandstein mit 400 g/m$^2$ aufgetragen. Nach 14 tägigem Lagern bei Raumtemperatur werden nachstehende Eigenschaften des hydrophobierten Kalksandsteins analog Beispiel 1 gemessen:

| | |
|---|---|
| Abperleffekt | sehr gut |
| Kontaktwinkel | 130° |
| Eindringtiefe | 3 mm |
| w-Wert | 0,073 kg/m$^2$xs$^{1/2}$ |
| sd-Wert | 0,02 m |

Der sd-Wert wurde nach DIN 52615 gemessen; sd-Werte < 0,1 m weisen auf hohe Wasserdampfdurchlässigkeit hin, sd-Werte > 0,1 m auf verringerte Wasserdampfdurchlässigkeiten.

Der 14 Tage gelagerte Kalksandstein wird mit Siliconharzemulsionsfarbe nach DIN 18363 (der Gehalt an organischen Harzen übersteigt nicht den Gehalt an Organopolysiloxanen) bestrichen. Dann wird die Haftzugefestigkeit der Beschichtung nach ISO 4624 bestimmt zu 2,8 N/mm$^2$. Ohne die hydrophobierende Grundierung mit Emulsion EM 2, 10 %ig, wird die Haftung dieser Siliconharzfarbe auf Kalksandstein nur mit 1,5 N/mm$^2$ ermittelt.

Auf 10 Gew.-% Festgehalt verdünnte Emulsion EM 7 wird 14 Tage bei 50°C gelagert und zeigt danach keine optische Veränderung. Anschließend wird diese verdünnte Emulsion durch Pinselauftrag auf eine 2 mm dick mit mürbem Kalkzementputz beschichtete Faserzementplatte aufgetragen und danach 14 Tage bei Raumtemperatur gelagert.

Beim unbehandelten Kalkzementputz wird ein w-Wert von 1,3 kg/m$^2$xs$^{1/2}$ gefunden.

Folgende Eigenschaften des so hydrophobierten Kalkzementputzes werden gefunden:

| | |
|---|---|
| Abperleffekt | sehr gut |
| Kontaktwinkel | 125° |
| Eindringtiefe | 2 mm |
| w-Wert | 0,068 kg/m$^2$xs$^{1/2}$ |

Auffallend ist die verbesserte Oberflächenfestigkeit des Kalkzementputzes nach der Applikation von 10 %iger EM 7.

Der so behandelte Untergrund kann mit Siliconharzemulsionsharzfarben nach Beispiel 3 beschichtet werden. Alle so beschichteten Präparate zeigen nach Q-UV-schnellbewitterung von 1000 h keinerlei Abplatzungen oder farbliche Veränderungen bei Erhalt des sehr guten Abperleffekts.

## Beispiel 3: Hydrophobierende Bindemittel für wäßrige Fassadenanstrichmittel und Putze

Untersucht werden hier Siliconharzemulsionsfarben nach DIN 18363 und Siliconharzputze. Diese Beschichtungsmittel gehören zu der Klasse, bei denen der Gehalt an organischen Harzen den Gehalt an Organopolysiloxanen nicht übersteigt.

Übliche Siliconharzanstrichmittel und -putze weisen nach ihrer Applikation zunächst über eine gewisse Zeit ("Auswaschperiode") noch eine relativ hohe Wasseraufnahmefähigkeit auf, durch die die anfängliche Beständigkeit gegen Witterungseinflüsse wie Regen eingeschränkt ist.

Nachstehend wird demonstriert, wie die Emulsionen Dispersionsfarben für Fassaden Frühregenfestigkeit verleihen.

Die Herstellung von Dispersionsfarben wird mit einem Dissolver ausgeführt. Dabei wird die in der Rezeptur vorgesehene Menge Wasser im Mischbehälter vorgelegt. Es werden die Pigmentbenetzungshilfsmittel zugefügt. Danach werden die Füllstoffe und Pigmente zugegeben und ca. 5 Minuten vordispergiert. Nachdem die Pigment- und Füllstoffagglomerate zerschlagen sind, wird nun die hydrophobierende Emulsion untergerührt und weitere 5 Minuten mit der gesamten Mischung dispergiert. Als letzter Schritt wird eine Polymerdispersion zugesetzt und 1 Minute bis zur homogenen Verteilung untergerührt. Die auf diese Weise gefertigte Dispersionsfarbe wird mit Verdickungsmittel auf Verarbeitungskonsistenz nachträglich eingestellt.

| Rezeptur | |
|---|---|
| 210,7 | Gew.-Teile Wasser |
| 8,4 | Gew.-Teile Natriumpolyphosphat-Lösung (10 %ig in $H_2O$) |
| 1,4 | Gew.-Teile Pigmentebenetzungshilfe (auf Basis Polyacrylsäure) |
| 70,2 | Gew.-Teile Talkum (Teilchengröße 20 µm) |
| 70,2 | Gew.-Teile Gefälltes Calciumcarbonat (mittlere Teilchengröße 0,3 µm) |
| 140,4 | Gew.-Teile Calciumcarbonat (Füllstoff Calcit-Type, mittlere Teilchengröße 5 µm) |
| 140,4 | Gew.-Teile Calciumcarbonat (Füllstoff Calcit-Type, mittlere Teilchengröße 15 µm) |
| 140,4 | Gew.-Teile Titandioxid, Rutiltype |
| 140,4 | Gew.-Teile hydrophobierende Emulsion |
| 56,2 | Gew.-Teile Dispersion aus Styrol und Acrylsäureester, 50 %ig in $H_2O$ (Polymerdispersion) |
| 21,3 | Gew.-Teile Verdickungsmittel (Hydroxyethylcellulose 2,5 %ige Lösung in $H_2O$) |
| 1000,0 | Gew.-Teile |

## Prüfung

Nach obigem Verfahren und obiger Rezemptur hergestellte Fassadenfarben werden auf ihre Wasseraufnahme untersucht. Dabei wird die Saugwirkung eines Baustoffes beziehungsweise die des Verbundsystems Baustoff/Beschichtung gemessen. Die Messung der kapillaren Wasseraufnahme ist in der DIN 52617 beschrieben. Das hier angewendete Verfahren wird als Kurztest in Anlehnung an obige Vorschrift ausgeführt. Als Anstrichträger dienen Kalksandstein-Scheiben (115x70x20 mm mit einer Oberfläche von 0,008 m²). Bei der Beschichtung der Anstrichträger werden als erster Anstrich 6,5 g auf die Oberfläche gegossen und mit einem Flachpinsel gleichmäßig verteilt, wobei die Seitenflächen ebenfalls beschichtet werden. Im Abstand von 24 Stunden erfolgt der zweite Anstrich. Die aufgetragene Menge Farbe beträgt 4,5 g. Die beschichteten Probekörper werden 24 Stunden bei Raumtemperatur und anschließend 24 Stunden bei 50°C gelagert. Zur weiteren Konditionierung erfolgt eine zusätzliche 24stündige Lagerung bei Raumtemperatur.

Die so vorbereiteten Probekörper werden in Schalen, die mit Schaumstoff ausgelegt und mit Wasser gefüllt sind, so eingebracht, daß die gestrichene Oberfläche ständig mit der mit Wasser gesättigten Schaumstoffoberfläche in Kontakt bleibt.

Die Gewichtszunahme wird - in abhängigkeit von der Zeit (nach 2,6 und 24 Stunden) - gemessen und mit derjenigen des unbehandelten Probekörpers verglichen.

**Referenz**

Ein unbehandelter Probekörper wird gemäß der beschriebenen Prüfmethode einer Wasserlagerung unterzogen

| Dauer der Lagerung [Std.] | Wasseraufnahme [kg/m$^2$] |
|---|---|
| 2 | 2,98 |
| 6 | 3,01 |
| 24 | 3,1 |

Erfindungsgemäße Fassadenfarbe

In vorstehender Rezeptur werden als hydrophobierende Emulsion die Emulsionen EM 4, EM 5 bzw. EM 6 in der in der Rezeptur angegebenen Menge unverdünnt eingesetzt. Bei der Prüfung auf Wasseraufnahme werden die in Tabelle IV aufgeführten Werte gefunden:

Tabelle IV

| Dauer der Lagerung (Std.) | Wasseraufnahme [kg/m$^2$] | | |
|---|---|---|---|
| | EM 4 | EM 5 | EM 6 |
| 2 | 0,15 | 0,10 | 0,20 |
| 6 | 0,25 | 0,20 | 0,35 |
| 24 | 0,33 | 0,33 | 0,45 |

Nicht erfindungsgemäße Fassadenfarbe

Eine Farbe gemäß Rezeptur wird hergestellt, indem die hydrophobierende Emulsion weggelassen wird und indem in dem Wasser zunächst ein Silikonharz der mittleren Zusammensetzung $(CH_3)_{1,2}Si(O)_{1,38}(OH)_{0,04}$, dessen Viskosität durch Zugabe von 45 Gew.-Teilen Solventnaphtha auf 2050 mPa·s (23°C) eingestellt war, unter Verwendung von 8,4 Gew.-Teilen eines Polyethylenoxid-alkylamins als Emulgator dispergiert wird. Anschließend werden die anorganischen Bestandteile usw. dispergiert.

| Dauer der Lagerung (Std.) | Wasseraufnahme [kg/m$^2$] |
|---|---|
| 2 | 0,40 |
| 6 | 2,90 |
| 24 | 3,10 |

Diese Probe wird anschließend neu eingelagert. Bei dieser zweiten Lagerung werden dann nachstehende Werte erzielt:

| Dauer der Lagerung (Std.) | Wasseraufnahme [kg/m$^2$] |
|---|---|
| 2 | 0,10 |
| 8 | 0,25 |
| 24 | 0,50 |

**Beispiel 4: Hydrophobierungsadditiv für wäßrige hochgefüllte Fassadenanstrichmittel und Putze**

Betrachtet werden hier hochgefüllte, eher bindemittelarme Fassadenanstrichmittel mit hoher kapillarer Wasseraufnahme, wie Dispersionssilikatfarben und -putze, hochgefüllte Beschichtungen auf Dispersionsbasis, Dispersionskalkfarben, Streichfüller und Armierungsmassen, Mineralfarben, Mineralputze, Kalkfarben u.ä. Die Pigmentvolumen-Konzentration (PVK) der Beschichtungen liegt typischerweise bei über 50%. Überlicherweise liegt die Wasseraufnahme der vorgenannten Beschichtungsmittel bei mindestens 3 kg/m$^2$ nach 24 Std., bestimmt nach dem in Beispiel 3 beschriebenen Kurztest.
Der Zusatz von nur 1% der unverdünnten Emulsionen als Hydrophobierugsadditiv zu den nachstehend in Tabelle V aufgeführten Beschichtungsmitteln, senkt diese kapillare Wasseraufnahme drastisch. Die Wasseraufnahme wurde bestimmt nach dem Kurztest in Anlehnung an DIN 52617 auf Kalksandstein.

Tabelle V

| Beschichtungsmittel | Wasseraufnahme [kg/m²] | Zusatz je 1 Gew.-% |
|---|---|---|
| Dispersionssilikatfarbe | 6,4<br>0,28 | -<br>EM 3 |
| Sumpfkalkputz | 7,4<br>0,35 | -<br>EM 9 |
| Dispersionsfüllfarbe (PVK 70) | 3,4<br>0,62 | -<br>EM 10 |

**Patentansprüche**

1. Poröse mineralische Baubeschichtungen bildende zementfreie Beschichtungsmittel, die ausgewählt werden aus Mineralfarben, Siliconharzemulsionsfarben, und -putzen, Dispersionssilikatfarben, Dispersionsfarben, Streichfüller, Armierungsmassen und Grundierungen, enthaltend eine wäßrige Emulsion, welche die Komponenten

   (A), welche ausgewählt werden aus

      (A1) $C_1$-$C_{20}$-Alkyl-$C_2$-$C_6$-alkoxysilanen und
      (A2) Alkoxygruppen enthaltendes Organopolysiloxan,

   (B) Organopolysiloxan, das zusätzlich zu anderen Organosiloxaneinheiben solche Siloxaneinheiten enthält, die über SiC-gebundene Reste mit basischem Stickstoff aufweisen, mit der Maßgabe, daß die Aminzahl des Organopolysiloxans mindestens 0,01 beträgt, und
   (C) Emulgator

   enthält.

2. Beschichtungsmittel nach Anspruch 1, bei der die $C_1$-$C_{20}$-Alkyl-$C_2$-$C_6$-alkoxysilane (A1) 1 oder 2 gleiche oder verschiedene, gegebenenfalls halogensubstituierte, über SiC-gebundene einwertige $C_1$-$C_{20}$-Alkylreste besitzen und die übrigen Reste gleiche oder verschiedene $C_2$-$C_6$-Alkoxyreste sind.

3. Beschichtungsmittel nach Anspruch 1 oder 2, bei der die Organopolysiloxane (A2) aus Einheiten der allgemeinen Formel (I)

$$R_x Si(OR^1)_y (OH)_z O_{\frac{4-x-y-z}{2}} \qquad (I)$$

   aufgebaut sind, in der

   **R** gleiche oder verschiedene einwertige, gegebenenfalls halogensubstituierte, über SiC-gebundene $C_1$-$C_{20}$-Kohlenwasserstoffreste,
   **R¹** gleiche oder verschiedene einwertige $C_1$-$C_6$-Alkylreste,
   **x** 0, 1, 2 oder 3, durchschnittlich 0,8 bis 1,8,
   **y** 0, 1, 2, oder 3, durchschnittlich 0,01 bis 2,0 und
   **z** 0, 1, 2 oder 3, durchschnittlich 0,0 bis 0,5 bedeuten, mit der Maßgabe, daß die Summe von **x**, **y** und **z** höchstens 3,5 beträgt.

4. Beschichtungsmittel nach einem der Ansprüche 1 bis 3, bei der die Organopolysiloxane (B) aus Einheiten der allgemeinen Formel (II)

$$R^2_a R^3_b (OR^4)_c SiO_{\frac{4-a-b-c}{2}} \qquad (II),$$

aufgebaut sind, in der

$R^2$   gleiche oder verschiedene einwertige, von basischem Stickstoff freie, gegebenenfalls halogensubstituierte, SiC-gebundene $C_1$-$C_{20}$-Kohlenwasserstoffreste bedeutet,

$R^3$   gleiche oder verschiedene einwertige, gegebenenfalls halogensubstituierte, SiC-gebundene basischen Stickstoff aufweisende $C_1$-$C_{30}$-Kohlenwasserstoffreste bedeutet,

$R^4$   gleich oder verschieden sein kann und Wasserstoffatom oder $C_1$-$C_6$-Alkylreste,

**a**   0, 1, 2 oder 3,

**b**   0, 1, 2 oder 3, durchschnittlich mindestens 0,05 und

**c**   0, 1, 2 oder 3 ist,

mit der Maßgabe, daß die Summe aus **a**, **b** und **c** kleiner oder gleich 3 ist und daß die Aminzahl des Organopolysiloxans (B) mindestens 0,01 beträgt.

5.   Beschichtungsmittel nach Anspruch 4, bei der Rest $R^3$ ein Rest der allgemeinen Formel (III)

$$R^5_2 NR^6\text{-} \qquad (III),$$

ist, worin

$R^5$   gleich oder verschieden sein kann und Wasserstoff oder einwertiger, gegebenenfalls substituierter $C_1$-$C_{10}$-Kohlenwasserstoffrest oder $C_1$-$C_{10}$-Aminokohlenwasserstoffrest und

$R^6$   einen zweiwertigen $C_1$-$C_{15}$-Kohlenwasserstoffrest bedeutet.

6.   Beschichtungsmittel nach einem der Ansprüche 1 bis 5, bei der die Organopolysiloxane (B) eine Viskosität von 5 bis 5000 mm$^2$/s bei 25°C aufweisen.

7.   Beschichtungsmittel nach einem der Ansprüche 1 bis 6, bei der der Emulgator (C) ausgewählt wird aus Polyvinylalkohol, der noch 5 bis 50 % Vinylacetateinheiten aufweist, mit einem Polymerisationsgrad von 500 bis 3000, Additionsprodukten von Alkylaminen mit Alkylresten von 8 bis 22 C-Atomen mit Ethylenoxid oder Propylenoxid und Alkylpolyglykosiden der allgemeinen Formel R*-O-$Z_o$, worin R* einen linearen oder verzweigten, gesättigten oder ungesättigten Alkylrest mit im Mittel 8 - 24 C-Atomen und $Z_o$ einen Oligoglykosidrest mit im Mittel o = 1 - 10 Hexose- oder Pentoseeinheiten oder Gemischen davon bedeuten.

8.   Beschichtungsmittel nach einem der Ansprüche 1 bis 7, bei der der Anteil des Emulgators (C) 0,1 bis 30 Gew.-% der Gesamtmenge der Komponenten (A) und (B) beträgt.

9.   Verfahren zur Hydrophobierung von poröse mineralische Baubeschichtungen bildenden Beschichtungsmitteln, bei dem die Beschichtungsmittel mit der wäßrigen Emulsion gemäß Anspruch 1 bis 8 versetzt werden.

**Claims**

1.   Cement-free coating compositions forming porous mineral coatings for buildings, which are selected from mineral paints, silicone resin emulsion paints and renders, silicate dispersion paints, emulsion paints, filling coatings, reinforcing compositions and primers which comprise an aqueous emulsion comprising the components

    (A) selected from among

        (A1) $C_1$-$C_{20}$-alkyl-$C_2$-$C_6$-alkoxysilanes and
        (A2) organopolysiloxane containing alkoxy groups,

    (B) organopolysiloxane containing, in addition to other organosiloxane units, siloxane units having SiC-bonded radicals containing basic nitrogen, with the proviso that the amine number of the organopolysiloxane is at least 0.01, and
(C) emulsifier.

2. Coating compositions according to Claim 1, wherein the $C_1$-$C_{20}$-alkyl-$C_2$-$C_6$-alkoxysilanes (A1) possess 1 or 2 identical or different, unsubstituted or halogen-substituted, SiC-bonded monovalent $C_1$-$C_{20}$-alkyl radicals and the remaining radicals are identical or different $C_2$-$C_6$-alkoxy radicals.

3. Coating compositions according to Claim 1 or 2, wherein the organopolysiloxanes (A2) are built up of units of the general formula (I)

$$R_x Si(OR^1)_y (OH)_z O_{\frac{4-x-y-z}{2}} \qquad \text{(I)}$$

where

R    are identical or different monovalent, unsubstituted or halogen-substituted, SiC-bonded $C_1$-$C_{20}$-hydrocarbon radicals,
$R^1$   are identical or different monovalent $C_1$-$C_6$-alkyl radicals,
x    is 0, 1, 2 or 3, on average from 0.8 to 1.8,
y    is 0, 1, 2 or 3, on average from 0.01 to 2.0 and
z    is 0, 1, 2 or 3, on average from 0.0 to 0.5,
     with the proviso that the sum of x, y and z is at most 3.5.

4. Coating compositions according to any of Claims 1 to 3, wherein the organopolysiloxanes (B) are built up of units of the general formula (II)

$$R^2_a R^3_b (OR^4)_c SiO_{\frac{4-a-b-c}{2}} \qquad \text{(II)},$$

where

$R^2$   are identical or different monovalent, unsubstituted or halogen-unsubstituted, SiC-bonded $C_1$-$C_{20}$-hydrocarbon radicals which are free of basic nitrogen,
$R^3$   are identical or different monovalent, unsubstituted or halogen-substituted, SiC-bonded $C_1$-$C_{30}$-hydrocarbon radicals containing basic nitrogen,
$R^4$   can be identical or different and can be hydrogen atoms or $C_1$-$C_6$-alkyl radicals,
a    is 0, 1, 2 or 3,
b    is 0, 1, 2 or 3, on average at least 0.05, and
c    is 0, 1, 2 or 3,
     with the proviso that the sum of a, b and c is less than or equal to 3 and the amine number of the organopolysiloxane (B) is at least 0.01.

5. Coating compositions according to Claim 4, wherein the radical $R^3$ is a radical of the general formula (III)

$$R^5_2 NR^6- \qquad \text{(III)},$$

where

$R^5$   can be identical or different and are each hydrogen or a monovalent, unsubstituted or substituted $C_1$-$C_{10}$-hydrocarbon radical or a $C_1$-$C_{10}$-aminohydrocarbon radical and
$R^6$   is a divalent $C_1$-$C_{15}$-hydrocarbon radical.

6. Coating compositions according to any of Claims 1 to 5, wherein the organopolysiloxanes (B) have a viscosity of from 5 to 5000 $mm^2$/s at 25°C.

7.  Coating compositions according to any of Claims 1 to 6, wherein the emulsifier (C) is selected from among polyvinyl alcohol still containing from 5 to 50% of vinyl acetate units and having a degree of polymerization of from 500 to 3000,

    addition products of alkylamines having alkyl radicals of from 8 to 22 carbon atoms with ethylene oxide or propylene oxide and
    alkyl polyglycosides of the general formula R*-O-$Z_o$, where R* is a linear or branched, saturated or unsaturated alkyl radical having on average 8-24 carbon atoms and $Z_o$ is an oligoglycoside radical having on average o = 1-10 hexose or pentose units or mixtures thereof.

8.  Coating compositions according to any of Claims 1 to 7, wherein the proportion of the emulsifier (C) is from 0.1 to 30% by weight of the total amount of the components (A) and (B).

9.  Process for waterproofing coating compositions forming porous mineral coatings for buildings, which comprises admixing the coating compositions with the aqueous emulsion according to any of Claims 1 to 8.


**Revendications**

1.  Agents de revêtement sans ciment formant des revêtements de construction minéraux poreux, qui sont sélectionnés parmi des peintures minérales, des peintures et des crépis d'émulsion de résine de silicone, des peintures de silicates en dispersion, des peintures en dispersion, des charges de peinture, des substances de renforcement et des couches de fond, contenant une émulsion aqueuse, qui contient les composants

    (A) sélectionnés parmi

        (A1) des $(C_1-C_{20})$alkyl$(C_2-C_6)$alkoxysilanes et
        (A2) un organopolysiloxane contenant des groupements alkoxy,

    (B) un organopolysiloxane contenant, en plus d'autres unités d'organosiloxane, des unités de siloxane du type présentant des radicaux liés par SiC avec de l'azote basique, étant entendu que l'indice d'amine de l'organopolysiloxane est au moins 0,01, et
    (C) un émulsionnant.

2.  Agents de revêtement suivant la revendication 1, dans lesquels les $(C_1-C_{20})$alkyl $(C_2-C_6)$alkoxysilanes (A1) possèdent 1 ou 2 radicaux alkyle en $C_1-C_{20}$ monovalents liés par SiC, identiques ou différents, le cas échéant substitués par un halogène et les radicaux restants sont des radicaux alkoxy en $C_2-C_6$ identiques ou différents.

3.  Agents de revêtement suivant la revendication 1 ou 2, dans lesquels les organopolysi-loxanes (A2) sont constitués d'unités de formule générale (I)

$$R_xSi(OR^1)_y(OH)_zO_{\frac{4-x-y-z}{2}} \qquad (I)$$

    dans laquelle

        R signifie des radicaux hydrocarbonés en $C_1-C_{20}$ liés par SiC, monovalents, identiques ou différents, le cas échéant substitués par un halogène,
        $R^1$ signifie des radicaux alkyle en $C_1-C_6$ monovalents identi-ques ou différents,
        x est 0, 1, 2 ou 3, en moyenne 0,8 à 1,8,
        y est 0, 1, 2 ou 3, en moyenne 0,01 à 2,0, et
        z est 0, 1, 2 ou 3, en moyenne 0,0 à 0,5, étant entendu que la somme de x, y, et z est au plus 3,5.

4.  Agents de revêtement suivant l'une des revendications 1 à 3, dans lesquels les organopolysiloxanes (B) sont constitués d'unités de formule générale (II)

$$R^2_a R^3_b (OR^4)_c \, Si \, O_{\frac{4-a-b-c}{2}} \qquad \text{(II)},$$

dans laquelle

$R^2$ signifie des radicaux hydrocarbonés en $C_1$-$C_{20}$ liés à SiC, monovalents, identiques ou différents, le cas échéant substitués par un halogène, exempts d'azote basique,

$R^3$ signifie des radicaux hydrocarbonés en $C_1$-$C_{30}$ liés à SiC, monovalents identiques ou différents, présentant de l'azote basique, le cas échéant substitués par un halogène,

$R^4$ peut être identique ou différent et peut être un atome d'hydrogène ou des radicaux alkyle en $C_1$-$C_6$,

a est 0, 1, 2 ou 3,

b est 0, 1, 2 ou 3, en moyenne au moins 0,05, et

c est 0, 1, 2 ou 3,

étant entendu que la somme de a, b, et c est inférieure ou égale à 3 et que l'indice d'amine de l'organopolysiloxane (B) est au moins 0,01.

5. Agents de revêtement suivant la revendication 4, dans lesquels le radical $R^3$ est un radical de formule générale (III)

$$R^5_2 NR^6- \qquad \text{(III)},$$

dans laquelle

$R^5$ peut être identique ou différent et peut être de l'hydrogène ou un radical hydrocarboné en $C_1$-$C_{10}$ monovalent, le cas échéant substitué ou un radical hydrocarboné en $C_1$-$C_{10}$ aminé et,

$R^6$ signifie un radical hydrocarboné en $C_1$-$C_{15}$ divalent.

6. Agents de revêtement suivant l'une des revendications 1 à 5, dans lesquels les organopolysiloxanes (B) présentent une viscosité de 5 à 5000 mm$^2$/s à 25°C.

7. Agents de revêtement suivant l'une des revendications 1 à 6, dans lesquels l'émulsionnant (C) est sélectionné parmi l'alcool polyvinylique qui présente encore 5 à 50% d'unités d'acétate de vinyle et avec un degré de polymérisation de 500 à 3000, des produits d'addition d'alkylamines avec des radicaux alkyle de 8 à 22 atomes de carbone avec de l'oxyde d'éthylène ou de l'oxyde de propylène et

des polyglycosides d'alkyle de formule générale R*-O-Z$_o$. où R* est un radical alkyle linéaire ou ramifié, saturé ou insaturé avec en moyenne 8-24 atomes de carbone et Zo est un radical oligoglycoside avec en moyenne o = 1-10 unités d'hexose ou de pentose ou des mélanges de celles-ci.

8. Agents de revêtement suivant l'une des revendications 1 à 7, dans lesquels la proportion d'émulsionnant (C) est 0,1 à 30% en poids de la quantité totale des composants (A) et (B).

9. Procédé pour rendre hydrophobe des agents de revêtement formant des revêtements de construction minéraux poreux, dans lequel les agents de revêtement sont mélangés avec l'émulsion aqueuse suivant les revendications 1 à 8.